# EUROPÄISCHE PATENTSCHRIFT

(11) **EP 0 900 975 B1**
(45) Veröffentlichungstag und Bekanntmachung des Hinweises auf die Patenterteilung: **04.10.2006**
(21) Anmeldenummer: 98116443.7
(22) Anmeldetag: 31.08.1998
(51) Int. Cl.: F21S 8/10, B60Q 1/00, B60Q 1/28

(54) **Haltevorrichtung für einen Reflektor und ein Lichtelement an einem Gehäuse einer Beleuchtungseinrichtung für Fahrzeuge**
Mounting device for a reflector and for a lighting element on a housing of a vehicle lighting assembly
Dispositif de fixation pour un réflecteur et un élément d' éclairage sur un boîtier d'un dispositif d'éclairage pour véhicule

(30) Priorität: 02.09.1997 DE 19738262
(43) Veröffentlichungstag der Anmeldung: 10.03.1999
(73) Patentinhaber: Hella KGaA Hueck & Co., 59552 Lippstadt (DE)
(72) Erfinder: Dennemark, Fridbert, 33142 Büren (DE); Gotowik, Ralf, 59558 Lippstadt (DE)

(56) Entgegenhaltungen:
- DE-A- 3 405 969
- DE-A- 4 418 399
- FR-A- 2 304 025
- KOHNE R L ET AL: "CENTER HIGH MOUNTED STOP LIGHT" RESEARCH DISCLOSURE,GB,INDUSTRIAL OPPORTUNITIES LTD. HAVANT, Nr. 304, 1. August 1989 (1989-08-01), Seite 590 XP000069784 ISSN: 0374-4353

## Beschreibung

Die Erfindung betrifft eine Halteeinrichtung für einen Reflektor und ein Lichtelement an einem Gehäuse einer Beleuchtungseinrichtung für Fahrzeuge, deren Lichtelement in einer Befestigungsöffnung des Gehäuses und einer Befestigungsöffnung des Reflektors halterbar ist und selbst ein den Reflektor am Gehäuse halterndes Befestigungselement ist.

Eine solche Halteeinrichtung für einen Reflektor und ein Lichtelement an einem Gehäuse einer Beleuchtungseinrichtung für Fahrzeuge ist aus der gattungsgemäßen DE 44 18 399 A1 bekannt. Die Beleuchtungseinrichtung weist ein aus Kunststoff bestehendes topfförmiges Gehäuse auf, dessen vordere Öffnung durch eine lichtdurchlässige Abschlußscheibe abgeschlossen ist. In dem Gehäuse sind ein Reflektor eines Scheinwerfers und seitlich neben dem Scheinwerfer ein Reflektor einer Leuchte angeordnet. Der Reflektor der Leuchte ist schalenförmig ausgeführt und weist im Scheitelbereich eine Befestigungsöffnung für ein Lichtelement auf. Das Lichtelement ist eine Glühlampe, welche mit ihrem Sockel in einen Sockelhalter lösbar eingesetzt ist. Der Sockelhalter ist in den beiden Befestigungsöffnungen, die mit ihrem sich zugewandten Randbereich aneinanderliegen mittels einer Renkverbindung festgesetzt sind. Der Sockelhalter weist radial nach außen abstehende Haltezapfen auf, welche durch entsprechend große Aussparungen in den Randbereichen der beiden Befestigungsöffnungen hindurchführbar sind. Nach einem Hindurchführen der Haltezapfen durch die Aussparungen ist der Sockelhalter zu drehen, und die Haltezapfen hintergreifen den Randbereich der Befestigungsöffnung des Reflektors. Dabei liegt der Sockelhalter mit einem umlaufenden federnden Flansch unter Vorspannung an der Außenseite des Randbereichs der Befestigungsöffnung des Gehäuses an. Durch die Befestigungsöffnung des Gehäuses und des Reflektors geht der Sockelhalter nur mit einem kleinen Spiel hindurch. Dadurch ist das Lichtelement in bezug auf den Reflektor besonders genau ausgerichtet. Hierbei ist es nachteilig, daß bei einem Wechsel des Lichtelementes der Reflektor in das Innere des Gehäuses fällt. Somit muß bei einem Wechsel des Lichtelements die lichtdurchlässige Abschlußscheibe vom Gehäuse abgenommen werden, um den Reflektor von Hand festhalten zu können. Dabei kann die Reflexionsfläche des Reflektors beschädigt werden. Bei einer zwischen der Abschlußscheibe und dem Gehäuse bestehenden Klebeverbindung ist ein Wechsel des Lichtelementes nicht möglich.

Bei der Beleuchtungseinrichtung für Fahrzeuge, welche aus der DE 42 39 753 C2 bekanntgeworden ist, liegt die Leuchte, nach hinten zurückversetzt, neben dem Scheinwerfer. Die Leuchte weist ein separates topfförmiges Gehäuse auf, dessen Vorderseite durch eine lichtdurchlässige Abschlußscheibe verschlossen ist. Der Sockelhalter des Lichtelementes ist ausschließlich in einer in die Rückwand des Gehäuses eingebrachten Befestigungsöffnung lösbar festgesetzt. Das Lichtelement ragt mit ihrem lichtdurchlässigen Kolben mit Spiel durch eine Aufnahmeöffnung eines schalenförmigen Reflektors hindurch. Der schalenförmige Reflektor liegt mit an seiner Rückseite angebrachten Ansätzen an einer entsprechend geformten schalenförmigen Rückwand des Gehäuses an. Zwischen den Ansätzen sind zur Rückwand des Gehäuses hin gerichtete federnde Rastarme an den Reflektor angeformt, welche in eine Hinterschneidung der Rückwand des Gehäuses selbsttätig eingreifen. Der Reflektor ist zwischen seinen Verrastungsstellen und seinen an der Rückseite des Gehäuses anliegenden Ansätzen verspannt, um eine starre Verbindung zwischen dem Reflektor und dem Gehäuse zu erreichen. Durch die inneren Verspannungskräfte kann die Reflexionsfläche des Reflektors so verformt sein, daß die von dem Reflektor reflektierten Lichtstrahlen nicht in die gewünschte Richtung gelenkt werden. Weiterhin kann der mit dem Gehäuse verrastete Reflektor durch die im Fahrbetrieb auftretenden Vibrationen sich vom Gehäuse lösen. Außerdem kann bei einem Wechsel des Lichtelementes das Lichtelement an den Reflektor anstoßen, und die zwischen Reflektor und Gehäuse bestehende Verbindung löst sich ungewollt. Würde die Aufnahmeöffnung in dem Reflektor zusätzlich als Befestigungsöffnung für das Lichtelement dienen, so wäre zwar der Reflektor sicher an dem Gehäuse gehaltert, jedoch wäre der Reflektor weiterhin zwischen seinen Anlagestellen und Befestigungsstellen verspannt.

Aufgabe der Erfindung ist es, die im Oberbegriff des Anspruchs 1 beschriebene Halteeinrichtung für einen Reflektor und ein Lichtelement an einem Gehäuse einer Beleuchtungseinrichtung für Fahrzeuge derart zu gestalten, daß der Reflektor durch das Lichtelement auch dann weitestgehend spannungsfrei an dem Gehäuse festsetzbar ist, wenn der Reflektor wegen eines möglichen Wechsels des Lichtelementes zusätzlich am Gehäuse gehalten und dünnwandig ausführbar ist. Diese Aufgabe wird nach der Erfindung dadurch gelöst, daß die Befestigungsöffnung des Reflektors in eine an den Reflektor angeformte Trägerwand eingebracht ist, welche sowohl durch das von dem Lichtelement gebildete Befestigungselement als auch durch eine zwischen der Trägerwand und dem Gehäuse bestehende Befestigungsvorrichtung an dem Gehäuse halterbar ist. Dadurch bleibt der Reflektor mit seiner optisch wirksamen Reflexionsfläche weitestgehend frei von Verspannungen, welche in der Trägerwand entstehen können. Bei einem sehr dünnwandigen Reflektor ist es weiterhin vorteilhaft, wenn die an den Reflektor angeformte Trägerwand den Reflektor im Gehäuse freistehend trägt. Ein solcher Reflektor ist auch mit einer großen Haltekraft an dem Gehäuse festsetzbar, ohne sich zu verziehen. In diesem Zusammenhang ist es weiterhin zweckmäßig, wenn eine vordere Seitenwand des Reflektors die mit der Befestigungsöffnung versehene Trägerwand aufweist. Der Reflektor ist sehr verwindungssteif, wenn die vordere Seitenwand umlaufend an den Reflektor angeformt ist und zu der angrenzenden, optisch wirksamen Reflexionsfläche des Reflektors quer verläuft. Die Trägerwand kann von einem Abschnitt der vorderen Seitenwand selbst gebildet sein. Besonders vorteilhaft ist es, wenn die Trägerwand zur Außenseite des Reflektors beabstandet ist und über Distanzelemente einstückig mit dem Reflektor verbunden ist, wobei der Reflektor eine Aufnahmeöffnung für das Lichtelement aufweist. Dadurch ist der Reflektor gegenüber Verspannungen der Trägerwand entkoppelt. Die Trägerwand kann an die die Reflexionsfläche aufweisende Seite des Reflektors oder die vordere Seitenwand des Reflektors angeformt sein.

Bei einer Beleuchtungseinrichtung, deren den Reflektor abdeckende lichtdurchlässige Abschlußscheibe weitestgehend frei von optischen Elementen ist, besteht weiterhin der Vorteil, wenn der dem Reflektor benachbarte Endbereich eines Sockels des Lichtelementes zwischen dem Reflektor und der zum Reflektor beabstandeten Trägerwand angeordnet ist, wobei das Lichtelement mit einem lichtdurchlässigen Kolben durch die Aufnahmeöffnung des Reflektors hindurchragt. Dadurch ist bei einem Blick in das Innere der Beleuchtungseinrichtung nur der lichtdurchlässige Kolben des Lichtelementes zu sehen.

Die Trägerwand des Reflektors ist starr und stabil mit dem Gehäuse verbindbar, wenn die Trägerwand plattenförmig ausgeführt ist und mit einer äußeren breiten Seitenfläche am Gehäuse flächig anliegt. Eine plattenförmige Trägerwand ist einfach und leicht an dem Gehäuse festsetzbar, wenn die zwischen der Trägerwand und dem Gehäuse bestehende Befestigungsvorrichtung eine Fügeverbindung ist. Die Fügeverbindung kann durch Schrauben, Nieten, Schweißen, Kleben und andere Verfahren hergestellt sein. Außerdem kann als Fügeverbindung eine klemmende und/oder rastende Steckverbindung dienen. In diesem Zusammenhang ist es weiterhin vorteilhaft, wenn an den Randbereich der Befestigungsöffnung der Trägerwand zumindest abschnittsweise ein Halteansatz angeformt ist, welcher in die Befestigungsöffnung des Gehäuses ragt und an die Innenseite der Befestigungsöffnung des Gehäuses angrenzt. Dadurch ist der Reflektor radial zur Mittelachse der Befestigungsöffnung des Gehäuses fixiert, und nach einem Einsetzen des Lichtelementes in die Befestigungsöffnungen des Reflektors und des Gehäuses ist der Reflektor genau zu dem Lichtelement ausgerichtet. Die Trägerwand ist einfach und leicht montierbar, wenn die von dem Reflektor beabstandete Trägerwand mit der in Einsetzrichtung gerichteten Seite an einer Anschlagfläche des Gehäuses angrenzt und mit seitlichen Flächen an in Einsetzrichtung des Reflektors verlaufende Führungsflächen angrenzt, wobei mindestens ein an das Gehäuse angeformter Haltevorsprung entgegen der Einsetzrichtung des Reflektors weist und an die dem Reflektor zugewandte Innenseite der Trägerwand angrenzt. Der Reflektor ist bei seiner Montage mit der Trägerwand zwischen dem Haltevorsprung und einer Seite des Gehäuses einzuschieben, bis er mit der in Einsetzrichtung gerichteten Seite der Trägerwand an der Anschlagfläche des Gehäuses anschlägt. Nach der Montage des Reflektors kann eine klemmende Verbindung zwischen der Trägerwand und dem Gehäuse bestehen.

Nach der Montage des Reflektors liegen die Befestigungsöffnungen des Reflektors und des Gehäuses deckungsgleich übereinander, wenn die in Einsetzrichtung des Reflektors gerichtete Seite der Trägerwand angeformte Federelemente aufweist, die den Halteansatz der Trägerwand unter Vorspannung gegen eine der Anschlagfläche zugewandte Innenfläche der Befestigungsöffnung des Gehäuses hält.

Das Einsetzen des Lichtelementes in die Befestigungsöffnungen des Reflektors und des Gehäuses kann durch eine Renkverbindung erfolgen. Nach dem Einsetzen des Lichtelementes in die Befestigungsöffnungen liegen die Befestigungsöffnungen mit ihren Randbereichen aneinander. Hierbei ist es vorteilhaft, wenn der Sockel der Lampe mit einem federnden Element versehen ist, welches sich an einer nach außen gerichteten Fläche des Gehäuses abstützt und den Reflektor gegen die Innenseite des Gehäuses hält. Der Sockel des Lichtelementes ist dicht in die Befestigungsöffnung des Gehäuses eingesetzt, wenn das federnde Element eine den Sockel umgebende Ringdichtung ist, welche an der Innenseite der Befestigungsöffnung des Gehäuses dicht anliegt.

Ein Ausführungsbeispiel nach der Erfindung ist in der Zeichnung dargestellt, und zwar zeigen:

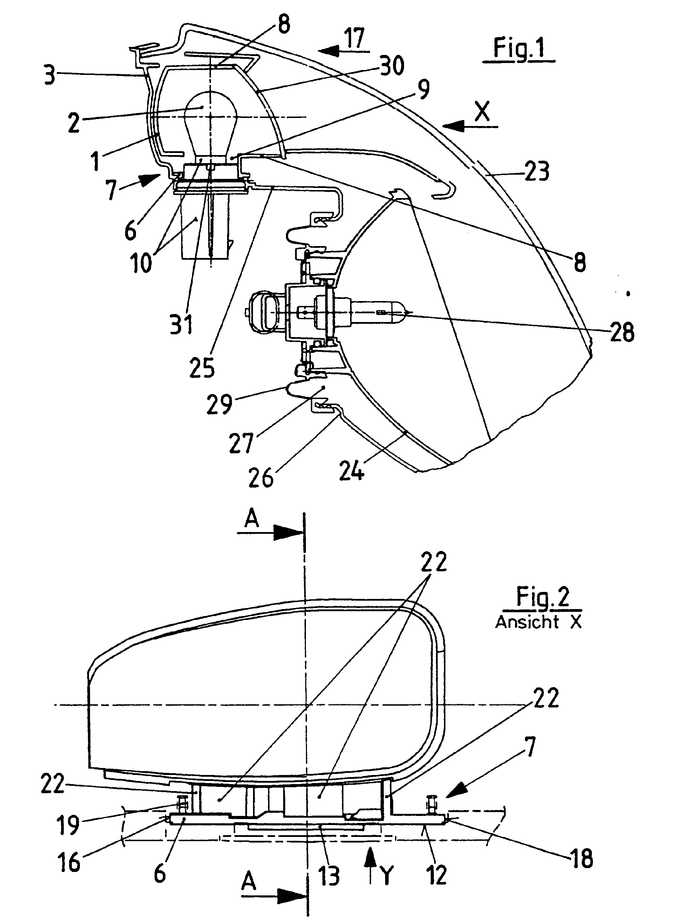

Figur 1 einen mittleren Horizontalschnitt durch eine Beleuchtungseinrichtung für Fahrzeuge, welche eine seitlich neben einem Scheinwerfer angeordnete Leuchte aufweist, deren Reflektor und Lichtelement an einem Gehäuse festgesetzt sind;
Figur 2 eine Ansicht aus Richtung x in Figur 1 auf die Leuchte;

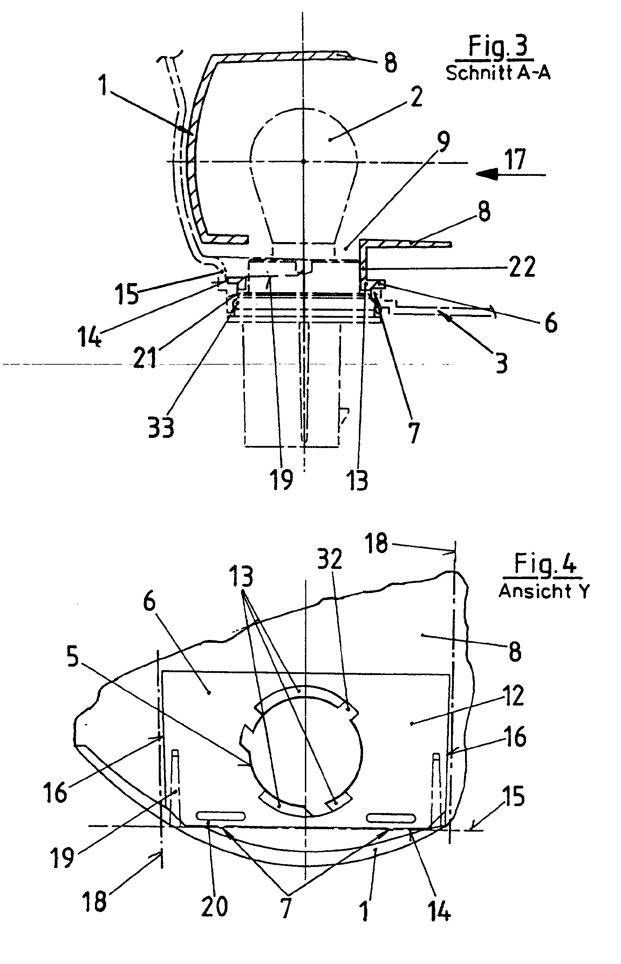

Figur 3 einen Schnitt nach der Linie A-A in Figur 2 durch die Leuchte;
Figur 4 eine Ansicht aus Richtung y in Figur 2 auf eine Trägerwand eines Reflektors der Leuchte und

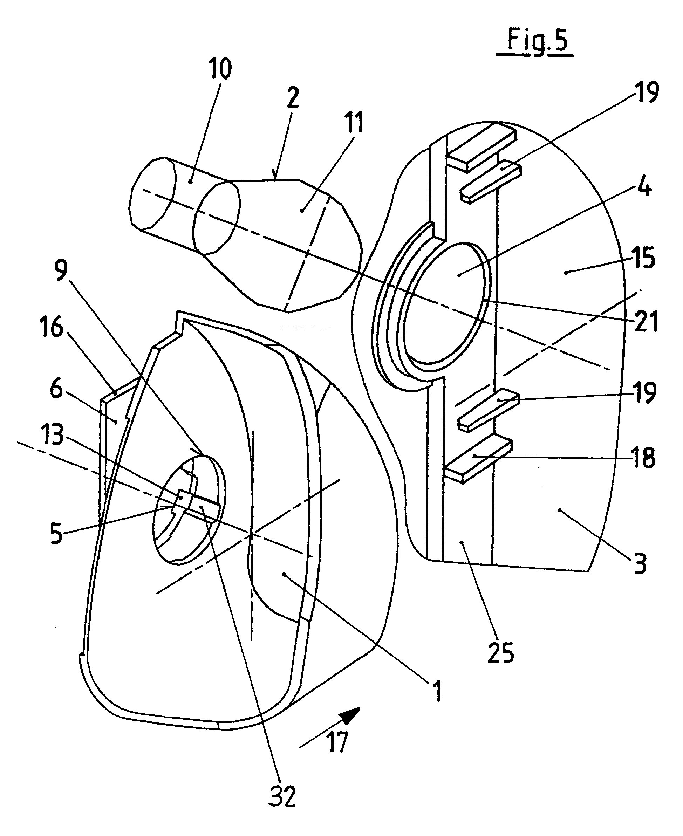

Figur 5 in einer perspektivischen Ansicht den Reflektor, ein Lichtelement und eine Teilansicht des Gehäuses der Leuchte vor ihrem Zusammenbau.

Die Beleuchtungseinrichtung weist ein aus Kunststoff bestehendes topfförmiges Gehäuse (3) auf, dessen vordere Öffnung durch eine haubenartige, lichtdurchlässige Abschlußscheibe (23) verschlossen ist. Die Abschlußscheibe (23) ist weitestgehend frei von optischen Elementen. Somit kann ein Betrachter durch die Abschlußscheibe (23) hindurch das Innere der Beleuchtungseinrichtung sehen. In das topfförmige Gehäuse (3) ist ein verstellbarer Reflektor (24) eines Scheinwerfers und ein Reflektor (1) einer Blinkleuchte angeordnet. Der Reflektor (1) der Blinkleuchte ist gegenüber dem Reflektor (24) des Scheinwerfers zur Rückseite der Beleuchtungseinrichtung hin zurückversetzt. Deshalb weist die Rückwand des Gehäuses (3) eine Stufe auf. Ein die Stufe bildender Rückwandabschnitt (25) des Gehäuses (3) verläuft annähernd in Lichtaustrittsrichtung der Beleuchtungseinrichtung und ist zwischen der Blinkleuchte und dem Scheinwerfer angeordnet. An den Rückwandabschnitt (25) grenzt ein quer zur Lichtaustrittsrichtung verlaufender Rückwandabschnitt (26) des Gehäuses (3) an. In den Rückwandabschnitt (26) ist eine Gehäuseöffnung (27) eingebracht, durch welche ein Lichtelement (28) des Scheinwerfers zugänglich ist. Die Gehäuseöffnung (27) ist durch eine elastische Manschette (29) verschlossen, welche an dem umlaufenden Rand der Gehäuseöffnung (27) und einem das Lichtelement (28) umgebenden Kragen des Reflektors (24) befestigt ist.

In den annähernd in Lichtaustrittsrichtung verlaufenden Rückwandabschnitt (25) des Gehäuses (3) ist eine Befestigungsöffnung (4) für ein Lichtelement (2) der Blinkleuchte eingebracht. Das Lichtelement (2) ist eine Glühlampe mit einem Glaskolben und einem Sockel (10). Der Sockel (10) besteht aus einem aus Kunststoff bestehenden Sockelhalter und einem eine Einheit mit dem Lichtelement (2) bildenden Metallsockel, welcher lösbar in den Sockelhalter eingesetzt ist. Die Befestigungsöffnung (4) des Gehäuses (3) für die Blinkleuchte und die Gehäuseöffnung (27) für das Lichtelement (28) des Scheinwerfers liegen wegen der stufigen Ausbildung der Rückwand des Gehäuses (3) nahe beieinander. Deshalb ist auch ein Wechsel der Lichtelemente (2 und 28) einfach durchführbar, wenn hinter der Beleuchtungseinrichtung im Fahrzeug nur wenig Raum vorhanden ist. Weiterhin baut die Beleuchtungseinrichtung im Bereich der Blinkleuchte wegen der seitlichen Anordnung des Sockels (10) des Lichtelementes (2) nicht tiefer.

Die Blinkleuchte weist einen aus Kunststoff bestehenden topfförmigen Reflektor (1) auf. Der Boden des topfförmigen Reflektors (1) weist an seiner Innenseite die optisch wirksame Reflexionsfläche auf, in deren Brennort der Glühfaden des Lichtelementes (2) angeordnet ist. Die optisch wirksame Reflexionsfläche des Reflektors (1) ist von der in Lichtaustrittsrichtung gerichteten Seitenwand (8) des Reflektors (1) umgeben. Der Reflektor (1) ist, von seiner Vorderseite gesehen, rechteckförmig gestaltet und durch eine lichtdurchlässige Lichtscheibe (30) verschlossen. Die Lichtscheibe (30) ist an der Seitenwand (8) des Reflektors (1) selbstrastend festgesetzt (nicht dargestellt). Ein dem Rückwandabschnitt (25) des Gehäuses (3) zugewandter Abschnitt der Seitenwand (8) des Reflektors (1) verläuft in einem Abstand zum Rückwandabschnitt (25) und weist eine Aufnahmeöffnung (9) für das Lichtelement (2) auf. Durch die Aufnahmeöffnung (9) geht das Lichtelement (2) mit Spiel hindurch, und das Lichtelement (2) ragt ausschließlich mit seinem Glaskolben aus der Aufnahmeöffnung (9) heraus. Somit ist bei einem Blick durch die Abschlußscheibe (23) und die Lichtscheibe (30) hindurch weitestgehend nur der Glaskolben des Lichtelementes (2) zu sehen. Der Reflektor (1) liegt mit einer plattenförmigen Trägerwand (6) an der Innenseite des Rückwandabschnitts (25) des Gehäuses (3) an. Die Trägerwand (6) ist über stegartige Distanzelemente (22) mit der Seitenwand (8) des Reflektors (1) einstückig verbunden. In die Trägerwand (6) ist eine Befestigungsöffnung (5) für das Lichtelement (2) eingebracht. Die Befestigungsöffnungen (4 und 5) des Gehäuses (4) und des Reflektors (5) verlaufen koaxial zur Längsachse des Lichtelementes (2) und liegen mit ihren Randbereichen aneinander. Der aus Kunststoff bestehende Sockelhalter des Sockels (10) des Lichtelementes (2) ist mittels eines Bajonettverschlusses in den beiden Befestigungsöffnungen (4 und 5) festgesetzt. An den Sockelhalter des Sockels (10) sind radial nach außen abstehende Haltezapfen (31) angeformt, welche durch Aussparungen (32) in den Randbereichen der Befestigungsöffnungen (4 und 5) hindurchführbar sind und an der Innenseite des Randbereichs der Befestigungsöffnung (5) der Trägerwand (6) durch eine den Sockelhalter des Sockels (10) umgebende Ringdichtung (33) gehalten sind. Die Ringdichtung (33) liegt an einer nach außen gerichteten Schulter der Innenfläche (21) der Befestigungsöffnung (4) des Gehäuses (3) dicht an. Somit dient das Lichtelement (2) als Befestigungselement für den Reflektor (1), und nach dem Einsetzen des Lichtelementes (2) in die Befestigungsöffnungen (4 und 5) ist der Reflektor (1) genau zu dem Lichtelement (2) ausgerichtet.

Die Trägerwand (6) des Reflektors (1) ist rechteckförmig gestaltet und liegt mit ihrer äußeren breiten Seitenfläche (12) flächig an der Innenseite des Gehäuses (3) an. An die Rückwand des Gehäuses (3) sind zwei in Lichtaustrittsrichtung weisende Haltevorsprünge (19) angeformt, welche zwischen der Seitenwand (8) des Reflektors (1) und der Trägerwand (6) verlaufen. Die Haltevorsprünge (19) liegen an der Trägerwand (6) an und halten die Trägerwand mit ihrer breiten Seitenfläche (12) an dem Rückwandabschnitt (25) des Gehäuses (3). Die rechteckige Trägerwand (9) grenzt mit ihren schmalen seitlichen Flächen (16) an in Lichtaustrittsrichtung verlaufende Führungsflächen (18) des Gehäuses (3) an. Die entgegen der Lichtaustrittsrichtung weisende schmale Seite (14) der Trägerwand (6) liegt mit einstückig mit der Trägerwand (6) ausgeführten Federelementen (20) an einer Anschlagfläche (15) des Gehäuses (3) an. Die Federelemente (20) drücken einen der an die Trägerwand (6) angeformten Halteansätze (13) gegen einen der Anschlagfläche (15) zugewandten Abschnitt der Innenfläche (21) der Befestigungsöffnung (4) des Gehäuses (3). Die Halteansätze (13) sind bogenförmige Abschnitte des Randbereichs der Befestigungsöffnung des Reflektors, welche mit kleinem Spiel in die Befestigungsöffnung (4) des Gehäuses (3) eingreifen.

Bei der Montage des Reflektors (1) ist dieser mit seiner Trägerwand (6) zwischen die Haltevorsprünge (19) und den Rückwandabschnitt (25) des Gehäuses (3) einzuschieben. Dabei gleitet die Trägerwand (6) mit ihren seitlichen Flächen (16) an den Führungsflächen (18) entlang, bis die Federelemente (20) der Trägerwand (6) an die in Lichtaustrittsrichtung gerichtete Anschlagfläche (15) anschlagen und die Trägerwand mit ihren Halteansätzen (13) in die Befestigungsöffnung (4) des Gehäuses (3) eingreift. Wegen dieser zwischen dem Reflektor (1) und dem Gehäuse (3) bestehenden Befestigungsvorrichtung ist ein Wechsel des Lichtelementes (2) möglich, ohne den Reflektor (1) durch die vordere Öffnung (3) des Gehäuses hindurch halten zu müssen. Um den Reflektor im Inneren des Gehäuses (3) von Hand halten zu können, müßte die lichtdurchlässige Abschlußscheibe (23) vom Gehäuse (3) abgenommen werden.

### Bezugszeichenliste

- 1: Reflektor
- 2: Lichtelement
- 3: Gehäuse
- 4: Befestigungsöffnung des Gehäuses
- 5: Befestigungsöffnung des Reflektors
- 6: Trägerwand
- 7: Befestigungsvorrichtung
- 8: Seitenwand
- 9: Aufnahmeöffnung
- 10: Sockel
- 11: Kolben
- 12: Seitenfläche
- 13: Halteansatz
- 14: Seite
- 15: Anschlagfläche
- 16: seitliche Fläche
- 17: Einsetzrichtung
- 18: Führungsflächen
- 19: Haltevorsprung
- 20: Federelemente
- 21: Innenfläche
- 22: Distanzelement
- 23: Abschlußscheibe
- 24: Reflektor
- 25: Rückwandabschnitt
- 26: Rückwandabschnitt
- 27: Gehäuseöffnung
- 28: Lichtelement
- 29: Manschette
- 30: Lichtscheibe
- 31: Haltezapfen
- 32: Aussparungen
- 33: Ringdichtung

## Patentansprüche

1. Halteeinrichtung für einen Reflektor (1) und ein Lichtelement (2) an einem Gehäuse (3) einer Beleuchtungseinrichtung für Fahrzeuge, deren Lichtelement (2) in einer Befestigungsöffnung (4) des Gehäuses (3) und einer Befestigungsöffnung (5) des Reflektors (1) halterbar ist und selbst ein den Reflektor (1) am Gehäuse (3) halterndes Befestigungselement ist, **dadurch gekennzeichnet, daß** die Befestigungsöffnung (5) des Reflektors (1) in eine an den Reflektor (1) angeformte Trägerwand (6) eingebracht ist, welche sowohl durch das von dem Lichtelement (2) gebildete Befestigungselement als auch durch eine zwischen der Trägerwand (6) und dem Gehäuse (3) bestehende Befestigungsvorrichtung (7) an dem Gehäuse (3) halterbar ist.

2. Halteeinrichtung nach Anspruch 1, **dadurch gekennzeichnet, daß** die an den Reflektor (1) angeformte Trägerwand (6) den Reflektor (1) im Gehäuse (3) freistehend trägt.

3. Halteeinrichtung nach Anspruch 1 oder 2, **dadurch gekennzeichnet, daß** eine vordere Seitenwand (8) des Reflektors (1) die mit der Befestigungsöffnung (5) versehene Trägerwand (6) aufweist.

4. Halteeinrichtung nach einem der Ansprüche 1 bis 3, **dadurch gekennzeichnet, daß** die Trägerwand (6) zur Außenseite des Reflektors (1) beabstandet ist und über Distanzelemente (22) einstückig mit dem Reflektor (1) verbunden ist, wobei der Reflektor (1) eine Aufnahmeöffnung (9) für das Lichtelement (2) aufweist.

5. Halteeinrichtung nach Anspruch 4, **dadurch gekennzeichnet, daß** der dem Reflektor (1) benachbarte Endbereich eines Sockels (10) des Lichtelementes (2) zwischen dem Reflektor (1) und der zum Reflektor (1) beabstandeten Trägerwand (6) angeordnet ist, wobei das Lichtelement (2) mit einem lichtdurchlässigen Kolben (11) durch die Aufnahmeöffnung (9) des Reflektors (1) hindurchragt.

6. Halteeinrichtung nach einem der Ansprüche 1 bis 5, **dadurch gekennzeichnet, daß** die Trägerwand (6) des Reflektors (1) plattenförmig ausgeführt ist und mit einer äußeren breiten Seitenfläche (12) am Gehäuse (3) flächig anliegt.

7. Halteeinrichtung nach einem der Ansprüche 1 bis 6, **dadurch gekennzeichnet, daß** die zwischen der Trägerwand (6) des Reflektors (1) und dem Gehäuse (3) bestehende Befestigungseinrichtung (7) eine Fügeverbindung ist.

8. Halteeinrichtung nach Anspruch 7, **dadurch gekennzeichnet, daß** an den Randbereich der Befestigungsöffnung (5) der Trägerwand (6) zumindest abschnittsweise ein Halteansatz (13) angeformt ist, welcher in die Befestigungsöffnung (4) des Gehäuses (3) ragt und an die Innenseite der Befestigungsöffnung (4) des Gehäuses (3) angrenzt.

9. Halteeinrichtung nach Anspruch 7 oder 8, **dadurch gekennzeichnet, daß** die von dem Reflektor (1) beabstandete Trägerwand (6) mit der in Einsetzrichtung (17) gerichteten Seite (14) an eine Anschlagfläche (15) des Gehäuses (3) angrenzt und mit seitlichen Flächen (16) an in Einsetzrichtung (17) des Reflektors (1) verlaufende Führungsflächen (18) des Gehäuses (3) angrenzt, wobei mindestens ein an das Gehäuse (3) angeformter Haltevorsprung (19) entgegen der Einsetzrichtung (17) des Gehäuses (1) weist und an die dem Reflektor (1) zugewandte Innenseite der Trägerwand (6) angrenzt.

10. Halteeinrichtung nach Anspruch 8 oder 9, **dadurch gekennzeichnet, daß** die in Einsetzrichtung (17) des Reflektors (1) gerichtete Seite (14) der Trägerwand (6) angeformte Federelemente (20) aufweist, die den Halteansatz (13) der Trägerwand (6) unter Vorspannung gegen eine der Anschlagfläche (15) zugewandte Innenfläche (21) der Befestigungsöffnung (4) des Gehäuses (3) hält.

## Claims

1. Mounting device for a reflector (1) and for a lighting element (2) on a housing (3) of a lighting assembly for vehicles, whose lighting element (2) can be mounted in a fixing opening (4) of the housing (3) and a fixing opening (5) of the reflector (1) and is itself a fixing element holding the reflector (1) onto the housing (3), **characterised in that** the fixing opening (5) of the reflector (1) is introduced into a support wall (6) formed on the reflector (1), said support wall being mountable on the housing (3) both by the fixing element formed by the lighting element (2) and also by a fixing device (7) disposed between the support wall (6) and the housing (3).

2. Mounting device according to claim 1, **characterised in that** the support wall (6) formed on the reflector (1) bears the reflector (1) in the housing (3) in self-supporting manner.

3. Mounting device according to claim 1 or 2, **characterised in that** a front side wall (8) of the reflector (1) has the support wall (6) which is provided with the fixing opening (5).

4. Mounting device according to one of the claims 1 to 3, **characterised in that** the support wall (6) is spaced from the external side of the reflector (1) and is connected via spacing elements (22) in one piece with the reflector (1), wherein the reflector (1) has an accommodating opening (9) for the lighting element (2).

5. Mounting device according to claim 4, **characterised in that** the end region of a socket (10) of the lighting element (2) adjoining the reflector (1) is arranged between the reflector (1) and the support wall (6) spaced from the reflector (1), wherein the lighting element (2) projects with a transparent bulb (11) through the accommodating opening (9) of the reflector (1).

6. Mounting device according to one of the claims 1 to 5, **characterised in that** the support wall (6) of the reflector (1) is constructed plate-shaped and lies with a broad external side face (12) against the housing (3).

7. Mounting device according to one of the claims 1 to 6, **characterised in that** the fixing device (7) disposed between the support wall (6) of the reflector (1) and the housing (3) is a bonded joint.

8. Mounting device according to claim 7, **characterised in that** formed at the edge region of the fixing opening (5) of the support wall (6), at least in sections, is a support shoulder (13), which projects into the fixing opening (4) of the housing (3) and adjoins the internal side of the fixing opening (4) of the housing (3).

9. Mounting device according to claim 7 or 8, **characterised in that** the support wall (6) spaced from the reflector (1) adjoins a stop surface (15) of the housing (3) with the side (14) oriented in the inserting direction (17) and, with lateral faces (16), adjoins guide surfaces (18) of the housing (3) running in the inserting direction (17) of the reflector (1), wherein at least one support projection (19) formed on the housing (3) faces against the inserting direction (17) of the housing (3)¹ and adjoins the internal side of the support wall (6) facing towards the reflector (1).
¹Translator's note: It has been assumed for the purposes of the translation that the reference number (1) which appears at the end of the third to last line of the German claim 9, associated with the word *Gehäuse* (="housing"), is erroneous and should read (3), the number that is otherwise associated with this word.

10. Mounting device according to claim 8 or 9, **characterised in that** the side (14) of the support wall (6) facing towards the inserting direction (17) of the reflector (1) has spring elements (20) formed onto it, which hold the support shoulder (13) of the support wall (6) under tension against an internal face (21) of the fixing opening (4) of the housing (3) facing towards the stop surface (15).

## Revendications

1. Dispositif de retenue pour un réflecteur (1) et pour un élément lumineux (2) sur un boîtier (3) d'un système d'éclairage pour véhicules automobiles, dont l'élément lumineux (2) peut être retenu dans une ouverture de fixation (4) du boîtier (3) et dans une ouverture de fixation (5) du réflecteur (1) et est lui-même un élément de fixation retenant le réflecteur (1) sur le boîtier (3), **caractérisé en ce que** l'ouverture de fixation (5) du réflecteur (1) est ménagée dans une paroi support (6) conformée sur le réflecteur (1), laquelle peut être retenue sur le boîtier (3) tant par l'élément de fixation formé par l'élément lumineux (2) que par un dispositif de fixation (7) se trouvant entre la paroi support (6) et le boîtier (3).

2. Dispositif de retenue selon la revendication 1, **caractérisé en ce que** la paroi support (6) conformée sur le réflecteur (1) porte le réflecteur (1) librement dans le boîtier (3).

3. Dispositif de retenue selon la revendication 1 ou 2, **caractérisé en ce qu'**une paroi latérale (8) antérieure du réflecteur (1) présente la paroi support (6) pourvue de l'ouverture de fixation (5).

4. Dispositif de retenue selon l'une des revendications 1 à 3, **caractérisé en ce que** la paroi support (6) est espacée de la paroi extérieure du réflecteur (1) et est reliée d'un seul tenant avec le réflecteur (1) via des espaceurs (22), le réflecteur (1) présentant une ouverture de réception (9) pour l'élément lumineux (2).

5. Dispositif de retenue selon la revendication 4, **caractérisé en ce que** la région d'extrémité, voisine du réflecteur (1), d'un culot (10) de l'élément lumineux (2), est agencée entre le réflecteur (1) et la paroi support (6) espacée du réflecteur (1), l'élément lumineux (2) faisant saillie avec une ampoule (11) transparente à travers l'ouverture de réception (9) du réflecteur (1).

6. Dispositif de retenue selon l'une des revendications 1 à 5, **caractérisé en ce que** la paroi support (6) du réflecteur (1) est réalisée en forme de plaque et est en appui à plat sur le boîtier (3) par une surface latérale (12) extérieure large.

7. Dispositif de retenue selon l'une des revendications 1 à 6, **caractérisé en ce que** le dispositif de fixation (7) se trouvant entre la paroi support (6) du réflecteur (1) et le boîtier (3) est une liaison par assemblage.

8. Dispositif de retenue selon la revendication 7, **caractérisé en ce que** sur la région de bord de l'ouverture de fixation (5) de la paroi support (6) est conformé au moins par tronçons un talon de retenue (13) qui fait saillie dans l'ouverture de fixation (4) du boîtier (3) et qui est adjacent à la face intérieure de l'ouverture de fixation (4) du boîtier (3).

9. Dispositif de retenue selon la revendication 7 ou 8, **caractérisé en ce que** par la face (14) orientée en direction de mise en place (17), la paroi support (6) espacée du réflecteur (1) est adjacente à une surface de butée (15) du boîtier (3) et par des surfaces latérales (16), elle est adjacente à des surfaces de guidage (18) du boîtier (3) qui s'étendent en direction de mise en place (17) du réflecteur (1), et au moins une saillie de retenue (19) conformée sur le boîtier (3) est orientée à l'encontre de la direction de mise en place (17) du boîtier (1) et est adjacente à la face intérieure, tournée vers le réflecteur (1), de la paroi support (6).

10. Dispositif de retenue selon la revendication 8 ou 9, **caractérisé en ce que** la face (14) de la paroi support (6), qui est orientée en direction de mise en place (17) du réflecteur (1), présente des éléments à effet de ressort (20) conformés qui retiennent le talon de retenue (13) de la paroi support (6) sous précontrainte contre une surface intérieure (21) de l'ouverture de fixation (4) du boîtier (3), laquelle surface est tournée vers la surface de butée (15).
